# EUROPÄISCHE PATENTSCHRIFT

(11) **EP 4 230 030 B1**
(45) Veröffentlichungstag und Bekanntmachung des Hinweises auf die Patenterteilung: **04.09.2024**
(21) Anmeldenummer: 23156897.3
(22) Anmeldetag: 15.02.2023
(51) Int. Cl.: A01G 17/02, A01D 75/20

(54) **LAUBSCHNEIDEVORRICHTUNG**
FOLIAGE CUTTING DEVICE
DISPOSITIF DE COUPE DE FEUILLES

(30) Priorität: 17.02.2022 DE 102022103843
(43) Veröffentlichungstag der Anmeldung: 23.08.2023
(73) Patentinhaber: ERO GmbH, 55469 Simmern (DE)
(72) Erfinder: MAYER, Michael, 55469 NIEDERKUMBD (DE); HEIDBERG, Carsten, 56850 RAVERSBEUREN (DE)
(74) Vertreter: Cabinet Nuss

(56) Entgegenhaltungen:
- CN-U- 213 586 925
- DE-A1- 4 026 284
- US-A1- 2019 387 675

## Beschreibung

Die Erfindung betrifft eine Laubschneidevorrichtung an einer längs einer Pflanze oder Pflanzenreihe verfahrbaren Einrichtung zur Pflanzenbearbeitung, wobei die Laubschneidevorrichtung mehrere rotierende oder oszillierende Messer aufweist, durch welche Teile des Blatt- und Astwerks einer Pflanze oder Pflanzenreihe beschneidbar sind, wobei die Laubschneidevorrichtung mindestens einen über den zu bearbeitenden Bereich der Pflanze sich erstreckenden Messerbalken aufweist und die Messer jeweils über die Länge des Messerbalkens in einer zur Pflanze gerichteten Schnittebene benachbart angeordnet sind, wobei die Messer mit einer mit weiteren Gehäuseteilen oder Blechen des Messerbalkens zusammenwirkenden Schutzvorrichtung abdeckbar sind. Insbesondere für die Kultivierung und Bearbeitung von Pflanzen in Reihenkulturen, wie etwa beim Weinanbau, beim Obst-, Hopfen- und Gemüseanbau, werden zur effizienten Bewirtschaftung Pflanzenbearbeitungseinrichtungen benötigt, die üblicherweise an einem landwirtschaftlichen Fahrzeug befestigt sind.

Solche Pflanzenbearbeitungseinrichtungen, wie zum Beispiel Laubschneider, Spritz- oder Sprühgeräte und Entlaubungsgeräte, sind oft an der Vorderseite (Frontanbaugeräte), an der Rückseite oder im Seitenbereich von Traktoren befestigt und können in ihrer Zustellung auf die zu bearbeitenden Pflanzen oder Pflanzreihen in verschiedenen Richtungen variiert werden.

Laubschneider werden verwendet, um Blätter und Blattwerk abzuschneiden sowie auch herausragende Triebe, bspw. eines Weinstocks, welche in den Fahrweg zwischen zwei Weinrebenzeilen hineinragen. Zum Antrieb wird ein Laubschneider häufig mit der hydraulischen oder der elektrischen Versorgung eines Traktors verbunden.

Der Benutzer fährt mit dem Traktor seitlich an der oder den Pflanzen entlang, so dass ein Schneidbereich des Schneidewerkzeugs der oder den Pflanzen zugewandt ist und in den Schneidbereich ragendes Laub, Äste oder Triebe entfernt.

Aus Sicherheitsgründen ist es dabei erforderlich, dass außerhalb des Betriebs zur Pflanzenbearbeitung, also dann, wenn etwa die Schneidgeräte nicht im Einsatz sind, die entsprechenden Werkzeuge oder Schneidwerkzeuge so geschützt transportiert und mit dem Traktor verfahren werden können, dass keinerlei Verletzungsgefahr für Personen besteht.

Das ist u.a. auch deshalb wichtig, weil Traktoren mit den Anbaugeräten auch normale Verkehrswege oder Zuwegungen benutzen müssen, wozu außerdem der Abstand zwischen den im Betrieb seitlich über das Fahrzeug hinausragenden Bearbeitungseinrichtungen bzw. derer Halterungen verkleinert werden muss, um beim Transport eventuelle Durchfahrtsbreiten oder Wegbreiten nicht zu überschreiten.

Die EP 1 443 815 B1 offenbart einen Schneidbalken für einen Laubschneider, in welchen modulartig auf einer Welle befestigte Schneidorgane, hier rotierende Schneidmesser, angebaut werden können, die entweder einzeln oder gemeinsam von einem Motor angetrieben sind. Teilbereiche der Schnittwerkzeuge sind zwar rückseitig mit Schutzblechen abgedeckt, eine ausreichende Sicherung beispielsweise beim Transport und außerhalb des Schneideinsatzes scheint hierdurch allerdings nicht möglich.

Die DE 20 2018 102 684 U1 offenbart eine Laubschneidvorrichtung mit mehreren um eine Messerachse rotierenden Messerelementen, wobei die Messerelemente über ein Kopplungsmittel und ein Spannelement so miteinander verbunden sind, dass ein gemeinsamer Antrieb für alle Messerelemente ermöglicht wird. Eine die Messerelemente abdeckende Schutzeinrichtung ist hier nicht vorgesehen.

Es sind bei solchen Laubschneidern auch Schutzeinrichtungen in Form von Abdeckungen bekannt, die nach dem Schneidbetrieb manuell über die Schneidorgane gelegt und mit dem Rahmen oder dem Messerbalken verschraubt werden. Zuvor müssen oft die Messer selbst in eine Position gedreht werden, die das Anbringen solcher Schutzbleche überhaupt erlaubt. Bei solchen Tätigkeiten ist die Verletzungsgefahr keinesfalls vernachlässigbar.

Weiterhin ist der Oberbegriff von Anspruch 1 aus der DE 40 26 284 A1 bekannt.

Die Aufgabe der vorliegenden Erfindung bestand demnach darin, einen Laubschneider bereitzustellen, der verbesserte Schutzeinrichtungen aufweist, die dann, wenn die Schneidgeräte nicht im Einsatz sind, auf einfache Weise aktiviert werden können und dafür sorgen, dass keinerlei Verletzungsgefahr für Personen besteht, wobei insbesondere auch unfallträchtige manuelle Tätigkeiten zur Aktivierung des Schutzes vermieden werden sollen.

Gelöst wird diese Aufgabe durch die Merkmale des Hauptanspruchs. Weitere vorteilhafte Ausbildungen sind in den Unteransprüchen offenbart.

Dabei ist bei einer Laubschneidevorrichtung, die mindestens einen über den zu bearbeitenden Bereich der Pflanze sich erstreckenden Messerbalken aufweist und bei der die Messer jeweils über die Länge des Messerbalkens in einer zur Pflanze gerichteten Schnittebene benachbart angeordnet sind, die erfindungsgemäße Schutzvorrichtung als eine sich über die Länge des Messerbalkens erstreckende Haube ausgebildet, die entlang der Längserstreckung des Messerbalkens und in Richtung auf die Messer und deren Schnittebene schwenk- oder verfahrbar ist. Die so ausgebildete Haube überdeckt in geschlossenen Zustand die Messer mindestens in der Schnittebene. Die Lagerung der Haube für das Schwenken oder Verfahren kann bspw. an den Enden des Messerbalkens erfolgen.

Eine solche an den Enden des Messerbalkens befestigte und gelagerte Haube lässt sich einfach in Richtung auf die Schnittebene schwenken oder verfahren, ohne dass irgendwelche manuellen Tätigkeiten an den Messern selbst oder innerhalb der Schnittebene durchgeführt werden müssen und bietet gleichzeitig durch das Abdecken der Schnittebene einen sicheren Schutz, so dass vor allem die Messerspitzen nicht frei hervorstehen.

Das gilt insbesondere für eine Weiterbildung, bei der die Laubschneidevorrichtung mehrere rotierende oder oszillierende Messer aufweist, durch welche Teile des Blatt- und Astwerks gleichzeitig auf gegenüberliegenden Seiten einer Pflanze oder Pflanzenreihe lateral beschneidbar sind, wobei die Laubschneidevorrichtung mindestens zwei sich verfahrbar gegenüberliegende und sich im Wesentlichen vertikal über die Schnitthöhe erstreckende Messerbalken aufweist und die Messer jeweils über die Länge der Messerbalken in einer zur Pflanze gerichteten Schnittebene benachbart so angeordnet sind, dass sich die Messer der Messerbalken gegenüberliegen.

Eine solche Laubschneidevorrichtung mit gegenüberliegenden Messerbalken und gegenüberliegenden Messern oder Schneidwerkzeugen wird für die Kultivierung und Bearbeitung von Pflanzen in Reihenkulturen eingesetzt, etwa beim Weinanbau. Die Messerbalken können dabei nach Ende des Schneidbetriebs oder etwa im Transportzustand so gegeneinander gefahren werden, dass die Messer einander in kürzestem Abstand direkt gegenüberliegen, während die Schnittebenen der Messerbalken beidseitig durch Schutzhauben und Schutzbleche abgedeckt sind.

Eine weitere vorteilhafte Ausbildung besteht darin, dass rotierende Messer mit einem überlappenden Schnittbereich bzw. Schnittquerschnitt vorgesehen sind, deren jeweilige Schnittebenen zueinander versetzt sind. Damit kann die Anzahl der Messer am Messerbalken erhöht und die Schnittgeschwindigkeit vergrößert werden. Gleichzeitig birgt eine Erhöhung der Anzahl der Messer auch weitere Gefahren für etwaige manuell anzubringende Abdeckungen, sodass sich hier die erfindungsgemäß schwenk- oder verfahrbaren Haube, welche die Messer abdeckt, in besonderer Weise eignet.

Eine weitere vorteilhafte Ausbildung besteht darin, dass die als schwenkbare Haube ausgebildete Schutzvorrichtung in geschlossenem Zustand die Messer in den nicht durch weitere Gehäuseteile oder Bleche abgedeckten Bereichen rückseitig überdeckt, beispielsweise etwa den halben Schnittbereich oder Messerradius überdeckt. Damit ist die Vorrichtung im geschlossenen Zustand auch auf der Rückseite abgedeckt, und bei zwei sich direkt gegenüberliegenden und in einen kurzen Abstand zueinander gebrachten Messerbalken ist der Messerbereich rundum abgedeckt. Eine solche Konstruktion bietet bei geringem Gewicht der Haube einen umfassenden Schutz.

Eine weitere vorteilhafte Ausbildung besteht darin, dass die als schwenk- oder verfahrbare Haube ausgebildete Schutzvorrichtung an beiden Enden des Messerbalkens mit Parallelogrammlenkern gelagert ist. Durch eine solche Lagerung kann die Haube auch orientierungsgleich, also ohne eine Drehung um sich selbst bzw. um eine ihrer Längsachsen in Richtung auf die Messer geschwenkt bzw. verfahren werden. Durch Parallelogrammlenker lassen sich unterschiedliche räumliche Schwenkbewegungen bzw. Raumkurven für die Schutzvorrichtung bzw. Haube sehr einfach realisieren.

Eine weitere vorteilhafte Ausbildung besteht darin, dass die Haube durch mindestens einen an Messerbalken bzw. dessen Träger und Haube angelenkten Linearantrieb schwenk- oder verfahrbar ist. Eine solche Ausbildung erlaubt eine sehr einfache Automatisierung ohne weiteren manuellen Zugriff, wenn die Schutzhaube geschlossen werden soll. Gerade im Zusammenwirken mit der Lagerung der Haube in Form eines Parallelogrammlenkers oder -getriebes, lässt sich durch eine unidirektionale bzw. lineare Krafteinwirkung eine beliebige Raumkurve durchfahren. In einer sehr einfachen und raumsparenden Konstruktion sind dabei die Parallelogrammlenker als Flachstäbe ausgebildet und einerseits an einer Endplatte des Messerbalkens und andererseits an einer Endplatte der als Haube ausgebildeten Schutzvorrichtung angelenkt.

Eine weitere vorteilhafte Ausbildung besteht darin, dass die Haube durch einen einerseits am Messerbalken und andererseits an der als Haube ausgebildeten Schutzvorrichtung angelenkten Linearantrieb schwenk- oder verfahrbar ist. Der lineare Antrieb ist somit auf einfachste Weise außerhalb des Schneidbereichs angeordnet und kann in seiner Gestaltung an die gesamte Bearbeitungseinrichtung auf einfachste Weise angepasst werden.

Eine weitere vorteilhafte Ausbildung besteht darin, dass der Linearantrieb als Hydraulikzylinder oder als elektrischer oder elektromagnetisch angetriebener Stellzylinder ausgebildet ist. Üblicherweise besitzen landwirtschaftliche Fahrzeuge, die Einrichtungen zur Pflanzenbearbeitung tragen, entweder hydraulisch oder elektrisch angetriebene Systeme, sodass auch der Antrieb der Schutzhaube auf einfache Weise in die gesamte Energieversorgung des Fahrzeugs integriert und bequem aus der Fahrerkabine bedient werden kann.

Eine weitere vorteilhafte Ausbildung besteht darin, dass eine der Endstellungen der schwenk- oder verfahrbaren Haube federbelastet anfahrbar ist. Eine solche Ausbildung kann insbesondere bei einer sehr gewichtsreduzierten Bauweise die Größe des Linearantriebs verringern oder dessen Gewicht bereits dadurch reduzieren, dass Steuerungen für eine beidseitige Betätigung nicht erforderlich sind.

Eine weitere vorteilhafte Ausbildung besteht darin, dass die Haube zur Schnittebene hin konkav gewölbt ist. Hierdurch ergibt sich nicht nur eine sichere und großräumige Abdeckung der Schnittebene bzw. der rotierende Messer, sondern in geöffneter Stellung der Haube eine die Rückseite des Messerbalkens und darin angeordnete Antriebselemente zumindest teilweise abdeckende konvex ausgebildete Außenkontur, welche eine Abweisfunktion für abgetrennte Pflanzenteile beim Schneiden bietet.

Eine weitere vorteilhafte Ausbildung besteht darin, dass die über die Länge des Messerbalkens sich erstreckende und als Haube ausgebildete Schutzvorrichtung zwei Endplatten aufweist, die durch parallel zur Längsachse und über die Länge des Messerbalkens sich erstreckende Lamellen miteinander verbunden sind. Gerade bei einer zur Schnittebene konkav gewölbten Haube ermöglicht eine solche Lamellenkonstruktion eine einfache Formgebung der Haubenwand sowie einen einfachen Austausch von einzelnen Wandbereichen nach etwaigen Beschädigungen der Haube. Alternativ kann auch eine entsprechend geformte Haube, bspw. aus Aluminium- oder Stahlblech verwendet werden.

Wie bereits erwähnt, lässt sich eine solche Laubschneidevorrichtung besonders gut an einen landwirtschaftlichen Fahrzeug einsetzen, bei dem mindestens zwei gegenüberliegende sich vertikal über die Schnitthöhe erstreckende Messerbalken so ausgebildet und so zueinander verfahrbar sind, dass im geschlossenen Zustand der als schwenkbare Haube ausgebildeten Schutzvorrichtung die Gehäuseteile oder Bleche der Messerbalken und die schwenk- oder verfahrbare Haube alle Schnittebenen vollständig gegen Eingriff abdecken. Das Schließen der Schutzvorrichtung lässt sich dann aus der Fahrerkabine fernbedienen.

Anhand eines Ausführungsbeispiels soll die Erfindung näher erläutert werden. Es zeigen
- Fig. 1: erfindungsgemäße Laubschneidevorrichtungen mit einer Halterung und einem Traggestell für die Laubschneidevorrichtungen,
- Fig. 2: die in Fig.1 dargestellten Laubschneidevorrichtungen in einer Draufsicht von oben,
- Fig. 3: die in Fig.1 dargestellten Laubschneidevorrichtungen in einer Ansicht im Arbeitszustand,
- Fig. 4: die in Fig.1 dargestellten Laubschneidevorrichtungen in einer Draufsicht von oben im Arbeitszustand,
- Fig. 5: eine Ansicht einer Laubschneidevorrichtung in Längsrichtung des Messerbalkens mit geöffneter Schutzvorrichtung,
- Fig. 6: eine Ansicht einer Laubschneidevorrichtung in Längsrichtung des Messerbalkens gemäß Fig. 5, jedoch mit geschlossener Schutzvorrichtung,
- Fig. 7: eine weitere Ansicht einer Laubschneidevorrichtung in Längsrichtung des Messerbalkens mit geschlossener Schutzvorrichtung,
- Fig. 8: eine Ansicht einer Laubschneidevorrichtung in Längsrichtung des Messerbalkens gemäß Fig. 7, jedoch mit geöffneter Schutzvorrichtung,
- Fig. 9: eine Ansicht einer Laubschneidevorrichtung gemäß Fig.7, im oberen Teil in Längsrichtung des Messerbalkens, im unteren Teil von der Schneidebene aus gesehen senkrecht zum Messerbalken, jeweils mit geschlossener Schutzvorrichtung,
- Fig. 10: eine Ansicht einer Laubschneidevorrichtung gemäß Fig.7, im oberen Teil in Längsrichtung des Messerbalkens, im unteren Teil von der Schneidebene aus gesehen senkrecht zum Messerbalken, jeweils mit geöffneter Schutzvorrichtung.

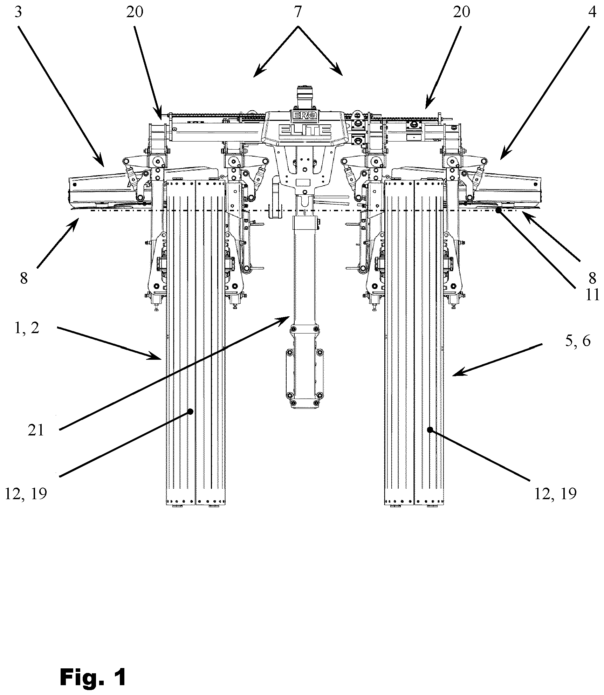

Die Fig. 1 zeigt vier erfindungsgemäße Laubschneidevorrichtungen 1 bis 6, welche an einer als Halterung und Traggestell für die Laubschneidevorrichtungen ausgebildeten Einrichtung 7 zur Pflanzenbearbeitung angeordnet sind. Die Einrichtung mitsamt den Laubschneidevorrichtungen sind im Front- oder im Heckbereich eines hier nicht näher dargestellten landwirtschaftlichen Fahrzeugs angeordnet und sind damit längs einer Pflanze oder Pflanzenreihe verfahrbar. Jede der Laubschneidevorrichtungen 1 bis 6 weist mehrere rotierende Messer auf, durch welche Teile des Blatt- und Astwerks einer Pflanze oder Pflanzenreihe beschneidbar sind. Anordnung und Ausbildung der in der Figur zum Teil nicht sichtbaren Messer sind weiter unten dargestellt. Die Laubschneidevorrichtungen 1, 2, 5 und 6 sind dabei als vertikal ausgerichtete Schneidevorrichtungen ausgebildet, die Laubschneidevorrichtungen 3 und 4 als horizontal ausgerichtete Laubschneidevorrichtungen.

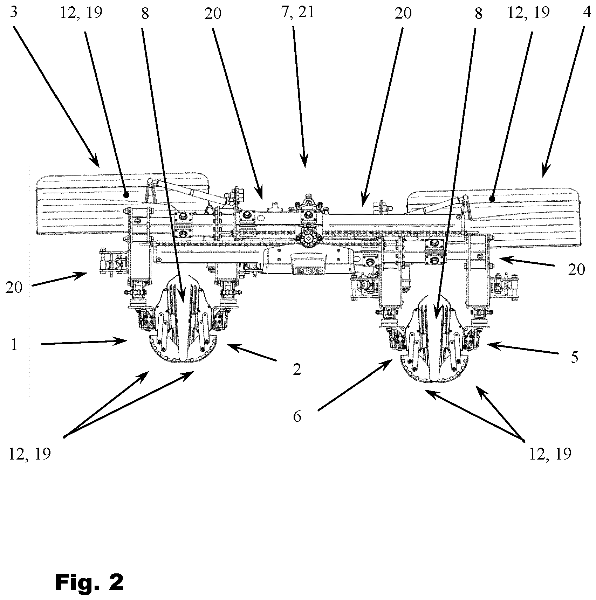

Fig. 2 zeigt die in Fig.1 dargestellten Laubschneidevorrichtungen in einer Draufsicht von oben. Hier wird u.a. deutlich, dass die Laubschneidevorrichtungen 1 und 2 sowie 5 und 6 jeweils einzelne Laubschneidevorrichtungen darstellen, die in eine Ruhestellung so zusammengefahren sind, dass sich deren rotierende Messer 8 direkt gegenüberstehen.

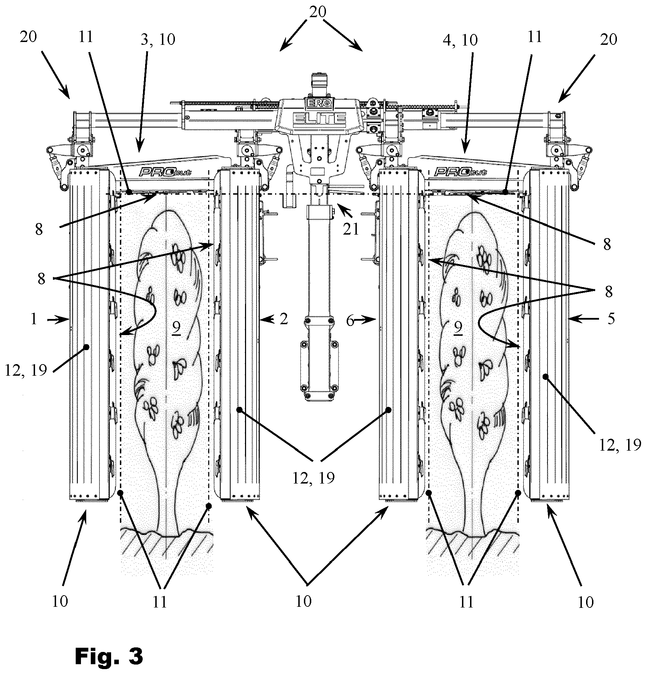

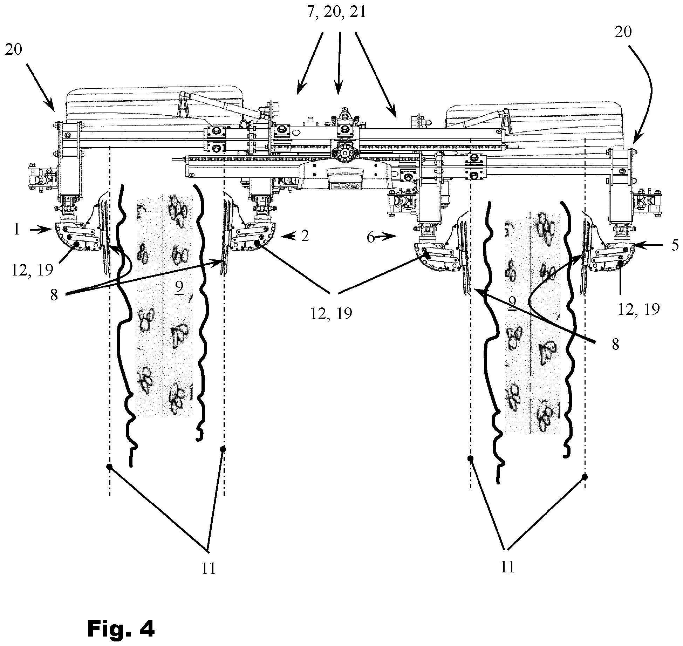

Fig. 3 und 4 zeigen die in Fig.1 dargestellten Laubschneidevorrichtungen ebenfalls in einer Frontansicht und in einer Draufsicht von oben, jedoch in einem Zustand, in dem die Laubschneidevorrichtungen 1 und 2 sowie 5 und 6 jeweils so auseinandergefahren sind, dass sie beidseitig einer zwischen ihnen befindlichen Pflanze oder Pflanzenreihe 9 positioniert sind. In den Figuren ist dabei eine Situation mit geöffneten und die Messer 8 rückseitig abdeckenden Schutzvorrichtungen 12 dargestellt, wobei die rotierenden Messer 8 freiliegen. In dieser Einstellung kann eine zwischen den rotierenden Messer 8 befindliche Pflanze oder Pflanzenreihe 9 auf beiden Seiten von überschüssigem Geäst und Laub befreit werden.

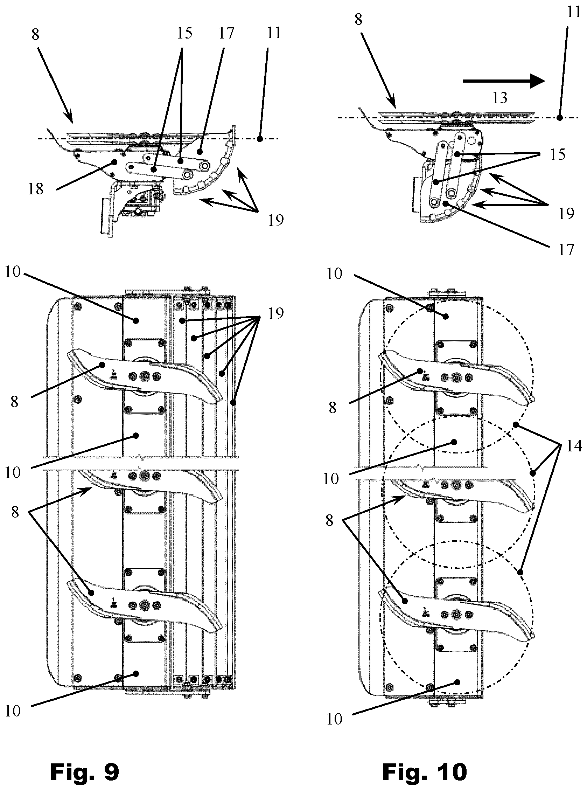

In der Zusammenschau der Fig. 1 bis 4 sowie 9 und 10 erkennt man, dass die jeweilige Laubschneidevorrichtung 1 bis 6 dazu einen über einen zu bearbeitenden Bereich der Pflanze 9 sich erstreckenden Messerbalken 10 aufweist. Bei den vertikal angeordneten Laubschneidevorrichtungen 1, 2, 5 und 6 steht der jeweilige Messerbalken senkrecht und erstreckt sich in etwa über die Schnitthöhe der zu bearbeitenden Pflanze oder Pflanzenreihe. Die Messer 8 sind jeweils über die Länge des Messerbalkens 10 in einer zur Pflanze gerichteten Schnittebene 11 benachbart angeordnet, wie auch in der Zusammenschau mit den Fig. 9 und 10 deutlich wird. Bei der Schnittebene 11 handelt es sich um eine aus Einzelschnittebenen gemittelte Schnittebene, wie unten erklärt.

Die senkrecht stehenden Messerbalken 10 der vertikalen Laubschneidevorrichtungen 1, 2, 5 und 6 weisen also senkrecht übereinander angeordnete rotierende Messer 8 auf, die jeweils in einer der senkrechten Schnittebenen 11 liegen. Durch die rotierenden Messer der Laubschneidevorrichtungen 1, 2, 5 und 6 werden Teile des Blatt- und Astwerks auf gegenüberliegenden Seiten einer Pflanze oder Pflanzenreihe 9 lateral geschnitten. Dazu sind jeweils zwei der sich verfahrbar bzw. verstellbar gegenüberliegenden und sich vertikal über die Schnitthöhe erstreckende Messerbalken 10 benachbart so angeordnet, dass sich die Messer 8 links und rechts der Pflanzenreihe 9 gegenüberliegen.

Die Messerbalken 10 der horizontalen Laubschneidevorrichtungen 3 und 4 sind dagegen waagerecht angeordnet und besitzen waagerecht nebeneinander angeordnete rotierende Messer 8, die jeweils in einer waagerechten Schnittebene 11 liegen.

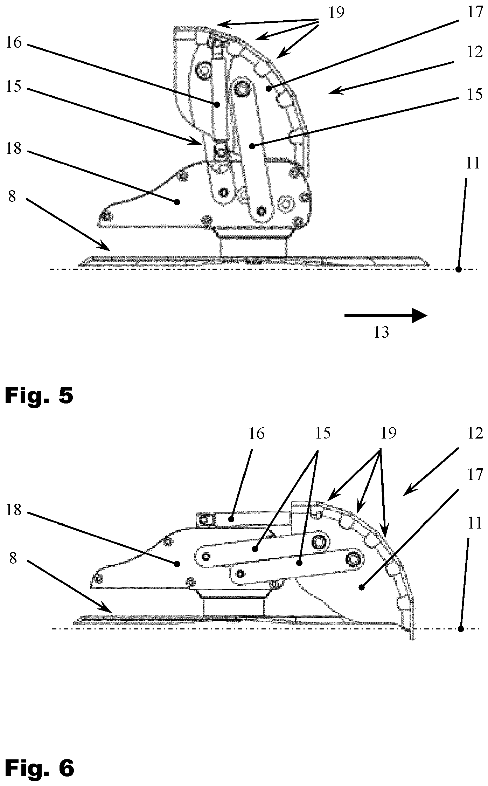

Messerbalken 10 und die jeweilige Anordnung der Messer 8 erkennt man am besten in den Fig. 9 und 10, die jeweiligen Schnittebenen 11 sind in den Fig. 5 bis 10 deutlicher dargestellt.

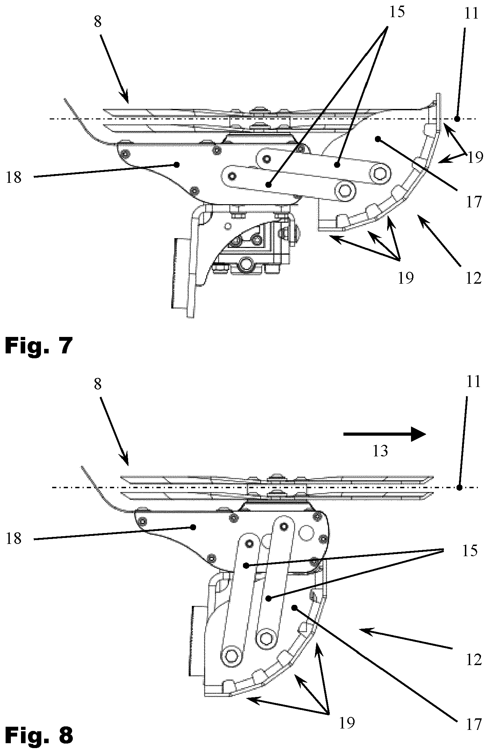

In der Zusammenschau mit den Fig. 7 bis 10 wird auch deutlich, dass die Schutzvorrichtung 12 mit weiteren Gehäuseteilen oder Blechen des Messerbalkens 10 zusammenwirkt und in geschlossenem Zustand die Messer 8 auf drei Seiten abdeckt, nämlich etwa den halben Messerradius der Messer 8 in den nicht durch weitere Gehäuseteile oder Bleche abgedeckten Bereichen rückseitig überdeckt.

Erfindungsgemäß ist die Schutzvorrichtung 12 als eine sich über die Länge des Messerbalkens 10 erstreckende, an den Enden des Messerbalkens gelagerte, entlang der Längserstreckung des Messerbalkens und in Richtung auf die Messer 8 und deren Schnittebene 11 schwenk- oder verfahrbare Haube ausgebildet ist, wobei die Haube in geschlossenem Zustand die Messer 8 rückseitig bis mindestens zur Schnittebene 11 überdeckt. Die als Haube ausgebildete Schutzvorrichtung 12 ist dabei zur Schnittebene hin konkav gewölbt und stellt dadurch nicht nur eine Schutzfunktion in geschlossenem Zustand bereit, sondern besitzt im geöffneten Zustand auch eine Abweisfunktion für Schnittgut beim Schneiden. Um dies zu verdeutlichen, ist in den Figuren 5, 8 und 10 auch die jeweilige Schnittrichtung 13 angegeben.

Fig. 7 und Fig. 9 zeigen jeweils eine geschlossene Schutzvorrichtung 12, während Fig. 8 und Fig. 10 jeweils eine im Betriebszustand, also während des Schneidens der Pflanze 9 geöffnete Schutzvorrichtung 12 zeigen.

In den Fig. 7 bis 10 ist dabei auch zu erkennen, dass die rotierenden Messer 8 der Laubschneidevorrichtung so angeordnet sind, dass sich ein überlappender Schnittbereich bzw. Schnittquerschnitt 14 ergibt, wie exemplarisch in der Fig.10 dargestellt. Dazu sind die jeweiligen Einzelschnittebenen benachbarter Messer leicht zueinander versetzt, so dass sich in Bezug auf die Pflanze oder Pflanzenreihe 9 eine aus den einzelnen Einzelschnittebenen gemittelte Schnittebene 11 ergibt. In den Fig. 5 und 6 sind dagegen zur Vereinfachung jeweils nur einzelne Messer 8 dargestellt.

Fig. 5 bis 8 verdeutlichen die Funktionsweise und die Bewegung der als schwenkbare Haube ausgebildeten Schutzvorrichtung 12. Die Schutzvorrichtung 12 ist an beiden Enden des Messerbalkens 10 mit Parallelogrammlenkern 15 gelagert und durch einen an Messerbalken und Haube angelenkten Linearantrieb 16 in Richtung auf die Messer und die Schnittebene schwenk- oder verfahrbar, wie in Fig. 5 und 6 erkennbar. Die Parallelogrammlenker sind als Flachstäbe ausgebildet und jeweils paarweise an beiden Enden der Schutzvorrichtung bzw. des Messerbalkens vorgesehen, bei den vertikalen Laubschneidevorrichtungen 1, 2, 5 und 6 also jeweils an deren oberen und unteren Enden.

Hierzu weisen sowohl die als Haube ausgebildete Schutzvorrichtung 12 als auch der Messerbalken jeweils Endplatten 17, 18 auf, an denen die Parallelogrammlenker angelenkt sind. Der Linearantrieb 16 ist hier als Hydraulikzylinder ausgebildet.

Die über die Länge des Messerbalkens 10 sich erstreckende und als Haube ausgebildete Schutzvorrichtung 12 besteht hier aus parallel zur Längsachse und über die Länge des Messerbalkens 10 sich erstreckende Lamellen 19, die zwischen den beiden Endplatten 17 angeordnet und mit diesen vorzugsweise lösbar verbunden sind. Die Lamellen und den Aufbau der Haube erkennt man am besten in Fig. 5 bis 10.

In der Zusammenschau der Fig. 1 bis 4 erkennt man, dass die als Traggestell für die Laubschneidevorrichtungen ausgebildete Einrichtung 7 verstellbare Halterungen 20 aufweist, mit deren Hilfe die Laubschneidevorrichtungen 1 bis 6 beidseitig in horizontaler Richtung verfahrbar sind. Über einen ebenfalls zur Einrichtung 7 gehörigen verstellbaren mittleren Tragbalken 21 können alle Laubschneidereinrichtungen auch in ihrer Höhe verfahren werden. Mithilfe der Halterungen 20 und dem Tragbalken 21 können die Laubschneidevorrichtungen der jeweiligen Pflanze bzw. Pflanzenreihe 9 so zugestellt werden, dass ein passgenauer Schnitt erfolgt.

### Bezugszeichenliste

### (Teil der Beschreibung)

- 1- 6: Laubschneidevorrichtung
- 7: Einrichtung zur Pflanzenbearbeitung, Halterung
- 8: rotierende Messer
- 9: Pflanze, Pflanzenreihe
- 10: Messerbalken
- 11: Schnittebene
- 12: Schutzvorrichtung
- 13: Schnittrichtung
- 14: Schnittquerschnitt eines Messers
- 15: Parallelogrammlenker
- 16: Linearantrieb (Hydraulikzylinder)
- 17: Endplatte des Messerbalkens
- 18: Endplatte der Schutzvorrichtung
- 19: Lamellen
- 20: verstellbare Halterung
- 21: verstellbarer Tragbalken

## Patentansprüche

1. Laubschneidevorrichtung (1 - 6) an einer längs einer Pflanze oder Pflanzenreihe (9) verfahrbaren Einrichtung (7) zur Pflanzenbearbeitung, wobei die Laubschneidevorrichtung mehrere rotierende oder oszillierende Messer (8) aufweist, durch welche Teile des Blatt- und Astwerks einer Pflanze oder Pflanzenreihe (9) beschneidbar sind, wobei die Laubschneidevorrichtung mindestens einen über den zu bearbeitenden Bereich der Pflanze sich erstreckende Messerbalken (10) aufweist und die Messer (8) jeweils über die Länge des Messerbalkens (10) in einer zur Pflanze gerichteten Schnittebene (11) benachbart angeordnet sind, wobei die Messer (8) mit einer mit weiteren Gehäuseteilen oder Blechen des Messerbalkens zusammenwirkenden Schutzvorrichtung (12) abdeckbar sind, wobei die Schutzvorrichtung (12) als eine sich über die Länge des Messerbalkens (10) erstreckende, entlang der Längserstreckung des Messerbalkens und in Richtung auf die Messer und deren Schnittebene (11) schwenkbare oder verfahrbare Haube ausgebildet ist, wobei die Haube in geschlossenen Zustand die Messer (8) mindestens in der Schnittebene (11) überdeckt, wobei die als schwenk- oder verfahrbare Haube ausgebildete Schutzvorrichtung (12) zur Schnittebene (11) hin konkav gewölbt ist, **dadurch gekennzeichnet, dass** die Haube in geöffneter Stellung eine die Rückseite des Messerbalkens und darin angeordnete Antriebselemente zumindest teilweise rückseitig abdeckende konvex ausgebildete Außenkontur bietet.

2. Laubschneidevorrichtung (1 - 6) nach Anspruch 1, die mehrere rotierende oder oszillierende Messer (8) aufweist, durch welche Teile des Blatt- und Astwerks auf gegenüberliegenden Seiten einer Pflanze oder Pflanzenreihe (9) lateral beschneidbar sind, wobei die Laubschneidevorrichtung (1, 2, 5, 6) mindestens zwei sich verfahrbar gegenüberliegende und sich im Wesentlichen vertikal über die Schnitthöhe erstreckende Messerbalken (10) aufweist und die Messer (8) jeweils über die Länge der Messerbalken (10) in einer zur Pflanze oder Pflanzenreihe (9) gerichteten Schnittebene (11) benachbart so angeordnet sind, dass sich die Messer beider Messerbalken (10) gegenüberliegen.

3. Laubschneidevorrichtung (1 - 6) nach Anspruch 1 oder 2, bei der rotierende Messer (8) mit einem überlappenden Schnittquerschnitt (14) vorgesehen sind, deren jeweilige Einzelschnittebenen zueinander versetzt sind.

4. Laubschneidevorrichtung (1 - 6) nach einem der Ansprüche 1 bis 3, bei der die als Haube ausgebildete Schutzvorrichtung (12) in geschlossenen Zustand die Messer (8) in den nicht durch weitere Gehäuseteile oder Bleche abgedeckten Bereichen rückseitig überdeckt.

5. Laubschneidevorrichtung (1 - 6) nach einem der Ansprüche 1 bis 4, bei der die als schwenk- oder verfahrbare Haube ausgebildete Schutzvorrichtung (12) an beiden Enden des Messerbalkens (10) mit Parallelogrammlenkern (15) gelagert und in Richtung auf die Messer (8) und die Schnittebene (11) schwenk- oder verfahrbar ist.

6. Laubschneidevorrichtung (1 - 6) nach Anspruch 5, bei der die als schwenk- oder verfahrbare Haube ausgebildete Schutzvorrichtung (12) durch mindestens einen an Messerbalken und Haube angelenkten Linearantrieb (16) schwenk- oder verfahrbar ist.

7. Laubschneidevorrichtung (1 - 6) nach Anspruch 5 oder 6, bei der die die als schwenk- oder verfahrbare Haube ausgebildete Schutzvorrichtung (12) durch einen einerseits an einer Endplatte (18) des Messerbalkens (10) und andererseits an einer Endplatte (17) der Schutzvorrichtung (12) angelenkten Linearantrieb (16) schwenk- oder verfahrbar ist.

8. Laubschneidevorrichtung (1 - 6) nach Anspruch 6 oder 7, bei der der Linearantrieb (16) als Hydraulikzylinder oder als elektrischer oder elektromagnetisch angetriebener Stellzylinder ausgebildet ist.

9. Laubschneidevorrichtung (1 - 6) nach einem der Ansprüche 6 bis 8, bei der eine der Endstellungen der als schwenk- oder verfahrbaren Haube ausgebildeten Schutzvorrichtung (12) federbelastet anfahrbar ist.

10. Laubschneidevorrichtung (1 - 6) nach einem der Ansprüche 1 bis 9, bei der die über die Länge des Messerbalkens sich erstreckende und als Haube ausgebildete Schutzvorrichtung (12) zwei Endplatten (17) aufweist, die durch parallel zur Längsachse und über die Länge des Messerbalkens (10) sich erstreckende Lamellen (19) miteinander verbunden sind.

11. Einrichtung (7) zur Pflanzenbearbeitung mit mindestens einer Laubschneidevorrichtung (1 - 6) nach einem der Ansprüche 1 bis 10, **dadurch gekennzeichnet, dass** die Einrichtung (7) Mittel zu ihrer Befestigung an einem landwirtschaftlichen Fahrzeug aufweist und die Laubschneidevorrichtung über verstellbare Halterungen (20) und Tragbalken (21) mit der Einrichtung (7) verbunden ist.

12. Einrichtung nach Anspruch 11, bei der mindestens jeweils zwei gegenüberliegende, sich vertikal über eine Schnitthöhe erstreckende Laubschneidevorrichtungen (1, 2, 5, 6) vorgesehen sind, deren Messerbalken (10), Messer (8) und Schutzvorrichtungen (12) so ausgebildet und zueinander verfahrbar oder schwenkbar sind, dass im geschlossenen Zustand der als schwenk- oder verfahrbare Haube ausgebildeten Schutzvorrichtung (12) die Gehäuseteile oder Bleche der Messerbalken und die schwenkbare Haube die Schnittebenen (11) der gegenüberliegenden Laubschneidevorrichtungen (1, 2, 5, 6) vollständig abdecken.

13. Landwirtschaftliches Fahrzeug mit einer Einrichtung nach Anspruch 11 oder 12, bei dem die Antriebe der verstellbaren Halterungen und Tragbalken sowie der des Schwenkantriebs (16) der als schwenk- oder verfahrbare Haube ausgebildeten Schutzvorrichtung (12) von Führerstand des Fahrzeugs fernbedienbar ausgebildet sind.

14. Landwirtschaftliches Fahrzeug nach Anspruch 13, bei dem die Energieversorgung der Antriebe der verstellbaren Halterungen und Tragbalken sowie des Schwenkantriebs der als schwenk- oder verfahrbare Haube ausgebildeten Schutzvorrichtung vom Fahrzeug aus erfolgt.

## Claims

1. Foliage cutting device (1 - 6) on an apparatus (7) for handling plants which is displaceable along a plant or a row of plants (9), wherein the foliage cutting device has a plurality of rotating or oscillating cutters (8) by which parts of the foliage or branches of a plant or a row of plants (9) are able to be trimmed, wherein the foliage cutting device has at least one cutter bar (10) that extends across the region of the plant to be handled, and the cutters (8) are in each case disposed in a cutting plane (11) directed towards the plant so as to be adjacent across the length of the cutter bar (10), wherein the cutters (8) are able to be covered with a protective device (12) which interacts with further housing parts or panels of the cutter bar, wherein the protective device (12) is designed as a hood which extends across the length of the cutter bar (10) and is pivotable or displaceable along the longitudinal extent of the cutter bar and in the direction towards the cutters and their cutting plane (11), wherein the hood in the closed state covers the cutters (8) at least in the cutting plane (11), wherein the protective device (12), designed as a pivotable or displaceable hood, is curved concavely towards the cutting plane (11),
**characterized in that** the hood in the opened position offers a convexly designed external contour which at least partially covers the rear side of the cutter bar and the rear side of drive elements disposed therein.

2. Foliage cutting device (1 - 6) according to Claim 1, which has a plurality of rotating or oscillating cutters (8) by way of which parts of the foliage and branches are able be cut laterally on opposite sides of a plant or a row of plants (9), wherein the foliage cutting device (1, 2, 5, 6) has at least two cutter bars (10) which lie opposite one another in a displaceable manner and extend substantially vertically across the cutting height, and the cutters (8) are in each case disposed across the length of the cutter bars (11) so as to be adjacent in a cutting plane (11) directed towards the plant or row of plants (9) in such a way that the cutters of both cutter bars (10) lie opposite one another.

3. Foliage cutting device (1 - 6) according to Claim 1 or 2, in which rotating cutters (8) having an overlapping cutting cross section (14) are provided, the respective individual cutting planes of said rotating cutters (8) being offset from one another.

4. Foliage cutting device (1 - 6) according to one of Claims 1 to 3, in which the protective device (12), designed as a hood, in the closed state covers the rear side of the cutters (8) in those regions that are not covered by further housing parts or panels.

5. Foliage cutting device (1 - 6) according to one of Claims 1 to 4, in which the protective device (12), designed as a pivotable or displaceable hood, is mounted on both ends of the cutter bar (10) by way of parallelogram control arms (15) and is pivotable or displaceable in the direction towards the cutters (8) and the cutting plane (11).

6. Foliage cutting device (1 - 6) according to Claim 5, in which the protective device (12), designed as a pivotable or displaceable hood, is pivotable or displaceable by way of at least one linear drive (16) which is articulated on the cutter bar and the hood.

7. Foliage cutting device (1 - 6) according to Claim 5 or 6, in which the protective device (12), designed as a pivotable or displaceable hood, is pivotable or displaceable by way of a linear drive (16) which is articulated on an end plate (18) of the cutter bar (10) on the one hand, and on an end plate (17) of the protective device (12) on the other hand.

8. Foliage cutting device (1 - 6) according to Claim 6 or 7, in which the linear drive (16) is designed as a hydraulic cylinder or as an electrically or electromagnetically driven positioning cylinder.

9. Foliage cutting device (1 - 6) according to one of Claims 6 to 8, in which one of the terminal positions of the protective device (12), designed as a pivotable or displaceable hood, is able to be approached in a spring-loaded manner.

10. Foliage cutting device (1 - 6) according to one of Claims 1 to 9, in which the protective device (12), designed as a hood and extending across the length of the cutter bar, has two end plates (17) which are connected to one another by slats (19) that extend parallel to the longitudinal axis and across the length of the cutter bar (10).

11. Apparatus (7) for handling plants, having at least one foliage cutting device (1 - 6) according to one of Claims 1 to 10, **characterized in that** the apparatus (7) has means for fastening the latter to an agricultural vehicle, and the foliage cutting device is connected to the apparatus (7) by way of adjustable mounts (20) and support bars (21).

12. Apparatus according to Claim 11, in which at least two mutually opposite foliage cutting devices (1, 2, 5, 6) which extend vertically across a cutting height are provided, the cutter bars (10), cutters (8) and protective devices (12) of said foliage cutting devices (1, 2, 5, 6) being designed and mutually displaceable or pivotable in such a way that in the closed state of the protective device (12), designed as a pivotable or displaceable hood, the housing parts or panels of the cutter bars and the pivotable hood completely cover the cutting planes (11) of the mutually opposite foliage cutting devices (1, 2, 5, 6) .

13. Agricultural vehicle having an apparatus according to Claim 11 or 12, in which the drives of the adjustable mounts and support bars as well as of the pivot drive (16) of the protective device (12) designed as a pivotable or displaceable hood are designed to be able to be remote-controlled from the driver's cab of the vehicle.

14. Agricultural vehicle according to Claim 13, in which the power supply to the drives of the adjustable mounts and support bars as well as of the pivot drive of the protective device designed as a pivotable or displaceable hood is performed from the vehicle.

## Revendications

1. Dispositif de coupe de feuilles (1 - 6) sur un appareil (7) déplaçable le long d'une plante ou d'une rangée de plantes (9) pour le traitement des plantes, le dispositif de coupe de feuilles présentant plusieurs lames (8) rotatives ou oscillantes, par lesquelles des parties du feuillage et des branches d'une plante ou d'une rangée de plantes (9) peuvent être coupées, le dispositif de coupe de feuilles présentant au moins une barre de lames (10) s'étendant sur la zone à traiter de la plante et les lames (8) étant agencées respectivement de manière voisine sur la longueur de la barre de lames (10) dans un plan de coupe (11) orienté vers la plante, les lames (8) pouvant être recouvertes par un dispositif de protection (12) coopérant avec d'autres parties de boîtier ou tôles de la barre de lames, le dispositif de protection (12) étant configuré sous la forme d'un capot s'étendant sur la longueur de la barre de lames (10), pouvant pivoter ou être déplacé le long de l'extension longitudinale de la barre de lames et en direction des lames et de leur plan de coupe (11), le capot recouvrant les lames (8) à l'état fermé au moins dans le plan de coupe (11), le dispositif de protection (12) configuré sous forme de capot pivotant ou déplaçable étant bombé de manière concave vers le plan de coupe (11), **caractérisé en ce que** le capot offre, en position ouverte, un contour extérieur configuré sous forme convexe recouvrant au moins partiellement par l'arrière le côté arrière de la barre de lames et les éléments d'entraînement qui y sont agencés.

2. Dispositif de coupe de feuilles (1 - 6) selon la revendication 1, qui présente plusieurs lames (8) rotatives ou oscillantes, par lesquelles des parties du feuillage et des branches sur des côtés opposés d'une plante ou d'une rangée de plantes (9) peuvent être coupées latéralement, le dispositif de coupe de feuilles (1, 2, 5, 6) présentant au moins deux barres de lames (10) opposées de manière déplaçable et s'étendant essentiellement verticalement sur la hauteur de coupe, et les lames (8) étant agencés respectivement de manière voisine sur la longueur des barres de lames (10) dans un plan de coupe (11) orienté vers la plante ou la rangée de plantes (9) de telle sorte que les lames des deux barres de lames (10) sont opposées.

3. Dispositif de coupe de feuilles (1 - 6) selon la revendication 1 ou 2, dans lequel sont prévues des lames rotatives (8) avec une section transversale de coupe (14) se chevauchant, dont les plans de coupe individuels respectifs sont décalés les uns par rapport aux autres.

4. Dispositif de coupe de feuilles (1 - 6) selon l'une quelconque des revendications 1 à 3, dans lequel le dispositif de protection (12) configuré sous forme de capot recouvre par l'arrière, à l'état fermé, les lames (8) dans les zones non recouvertes par d'autres parties de boîtier ou par des tôles.

5. Dispositif de coupe de feuilles (1 - 6) selon l'une quelconque des revendications 1 à 4, dans lequel le dispositif de protection (12) configuré sous forme de capot pivotant ou déplaçable est monté aux deux extrémités de la barre de lames (10) avec des bras de parallélogramme (15) et peut pivoter ou être déplacé en direction des lames (8) et du plan de coupe (11).

6. Dispositif de coupe de feuilles (1 - 6) selon la revendication 5, dans lequel le dispositif de protection (12) configuré sous forme de capot pivotant ou déplaçable peut être pivoté ou déplacé par au moins un entraînement linéaire (16) articulé sur la barre de lames et le capot.

7. Dispositif de coupe de feuilles (1 - 6) selon la revendication 5 ou 6, dans lequel le dispositif de protection (12) configuré sous forme de capot pivotant ou déplaçable peut être pivoté ou déplacé par un entraînement linéaire (16) articulé d'une part sur une plaque d'extrémité (18) de la barre de lames (10) et d'autre part sur une plaque d'extrémité (17) du dispositif de protection (12).

8. Dispositif de coupe de feuilles (1 - 6) selon la revendication 6 ou 7, dans lequel l'entraînement linéaire (16) est configuré sous forme de cylindre hydraulique ou sous forme de cylindre de réglage à entraînement électrique ou électromagnétique.

9. Dispositif de coupe de feuilles (1 - 6) selon l'une quelconque des revendications 6 à 8, dans lequel l'une des positions d'extrémité du dispositif de protection (12) configuré sous forme de capot pivotant ou déplaçable peut être abordée de manière sollicitée par ressort.

10. Dispositif de coupe de feuilles (1 - 6) selon l'une quelconque des revendications 1 à 9, dans lequel le dispositif de protection (12) s'étendant sur la longueur de la barre de lames et configuré sous forme de capot présente deux plaques d'extrémité (17) qui sont reliées entre elles par des lamelles (19) s'étendant parallèlement à l'axe longitudinal et sur la longueur de la barre de lames (10).

11. Installation (7) de traitement de plantes avec au moins un dispositif de coupe de feuilles (1 - 6) selon l'une quelconque des revendications 1 à 10, **caractérisée en ce que** l'installation (7) présente des moyens pour sa fixation sur un véhicule agricole et le dispositif de coupe de feuilles est relié à l'installation (7) par l'intermédiaire de supports réglables (20) et de poutres porteuses (21).

12. Installation selon la revendication 11, dans laquelle il est prévu au moins respectivement deux dispositifs de coupe de feuilles (1, 2, 5, 6) opposés, s'étendant verticalement sur une hauteur de coupe, dont les barres de lames (10), les lames (8) et les dispositifs de protection (12) sont configurés et peuvent être déplacés ou pivotés les uns par rapport aux autres de telle sorte qu'à l'état fermé du dispositif de protection (12) configuré sous forme de capot pivotant ou déplaçable, les parties de boîtier ou les tôles des barres de lames et le capot pivotant recouvrent complètement les plans de coupe (11) des dispositifs de coupe de feuilles (1, 2, 5, 6) opposés.

13. Véhicule agricole avec une installation selon la revendication 11 ou 12, dans lequel les entraînements des supports et des poutres porteuses réglables ainsi que celui de l'entraînement pivotant (16) du dispositif de protection (12) configuré sous forme de capot pivotant ou déplaçable sont configurés de manière à pouvoir être télécommandés depuis le poste de conduite du véhicule.

14. Véhicule agricole selon la revendication 13, dans lequel l'alimentation en énergie des entraînements des supports et des poutres porteuses réglables ainsi que de l'entraînement pivotant du dispositif de protection configuré sous forme de capot pivotant ou déplaçable est effectuée depuis le véhicule.
